# FASCICULE DE BREVET EUROPEEN

(11) **EP 2 938 693 B1**
(45) Date de publication et mention de la délivrance du brevet: **17.07.2019**
(21) Numéro de dépôt: 13815071.9
(22) Date de dépôt: 06.12.2013
(51) Int. Cl.: C09K 5/04

(54) **COMPOSITION COMPRENANT DU 2,3,3,3-TETRAFLUOROPROPENE ET DU 1,2-DIFLUOROETHYLENE**
ZUSAMMENSETZUNG MIT 2,3,3,3-TETRAFLUORPROPEN UND 1,2-DIFLUOROETHYLEN
COMPOSITION CONTAINING 2,3,3,3-TETRAFLUOROPROPENE AND 1,2-DIFLUOROETHYLENE

(30) Priorité: 26.12.2012 FR 1262765
(43) Date de publication de la demande: 04.11.2015
(73) Titulaire: Arkema France, 92700 Colombes (FR)
(72) Inventeur: DEUR-BERT, Dominique, F-69390 Charly (FR); WENDLINGER, Laurent, F-69510 Soucieu en Jarrest (FR)
(74) Mandataire: Dang, Doris
(86) Numéro de dépôt international: PCT/FR2013/052972
(87) Numéro de publication internationale: WO 2014/102477

(56) Documents cités:
- WO-A1-2012/011609
- US-A1- 2011 252 801

## Description

La présente invention concerne des compositions comprenant du 2,3,3,3-tetrafluoropropène et du 1,2-difluoroethylène, utiles dans de nombreux domaines d'applications.

Les fluides à bases d'halogénocarbones ont trouvés ainsi de nombreuses applications dans des domaines industrielles variés, notamment en tant que fluide de transfert de chaleur, propulseurs, agents moussants, agents gonflants, diélectriques gazeux, milieu de polymérisation ou monomère, fluides supports, agents pour abrasifs, agents de séchage et fluides pour unité de production d'énergie.

Une importance particulière est donnée aux fluides ayant un faible impact sur l'environnement.

L'avantage d'utiliser des fluides azéotropiques ou quasi-azéotropiques est qu'ils ne fractionnent pas lors de processus d'évaporation et agissent (quasiment) comme un corps pur. Cependant il est difficile d'identifier de nouveaux fluides répondant à ces caractéristiques, puisque les azéotropes ne sont pas prévisibles.

Le document US 2011/252801 décrit des compositions comprenant Z-1,2-difluoroéthylène. Le document WO 2012/011609 décrit une méthode de purification du HFO-1234yf par élimination du HF.

La présente invention a pour objet une composition azéotropique ou quasi-azéotropique comprenant les composés 2,3,3,3-tetrafluoropropène, du fluorure d'hydrogène et 1,2-difluoroethylène.

Dans ce qui suit, les composés suivants représentent :
- 2,3,3,3-tetrafluoropropene : HFO-1234yf ou 1234yf
- 1,2-difluoroethylène : HFO-1132 ou 1132

L'expression « quasi-azéotropique » a un sens large et est destinée à inclure les compositions qui sont strictement azéotropique et celles qui se comportent comme un mélange azéotropique.

Un mélange est azéotropique lorsque la pression au point de rosée est égale à celle au point de formation de bulles, ce qui signifie que la composition de vapeur est égale à celle du liquide condensée.

Un mélange est considéré comme quasi-azéotropique lorsque la différence de pression entre la pression au point de rosée et la pression au point de formation de bulles est inférieure ou égale à 5 %, sur la base de la pression au point de formation de bulles.

Selon un mode de mise oeuvre, la composition comprend, préférentiellement consistant essentiellement en, de 45 % à 90 % en mole de 2,3,3,3-tetrafluoropropène et de 55 % à 10 % en mole de 1,2-difluoroethylène.

Selon un mode de réalisation, la composition comprend, préférentiellement consistant essentiellement en, de 55 % à 80 % en mole de 2,3,3,3-tetrafluoropropène et de 45 % à 20 % en mole de 1,2-difluoroethylène.

Selon un mode de mise en oeuvre particulièrement préféré, la composition comprend, préférentiellement consistant essentiellement en, de 62 % à 69 % en mole de 2,3,3,3-tetrafluoropropène et de 38 % à 31 % en mole de 1,2-difluoroethylène à une température comprise entre -30 °C à 56 °C et une pression comprise entre 1 et 15 bars.

Selon un autre mode de réalisation, la composition selon l'invention comprend du fluorure d'hydrogène.

Selon un mode de mise en oeuvre, la composition selon l'invention comprend, préférentiellement consistant essentiellement en, de 10 % à 55 % en mole de HF, 30 % à 75 % en mole de 2,3,3,3-tetrafluoropropene et 15 % à 40 % en mole de 1,2-difluoroethylène.

L'invention concerne également l'utilisation d'un fluide comprenant la composition selon l'invention en tant que fluide de transfert de chaleur, propulseurs, agents moussants, agents gonflants, diélectriques gazeux, milieu de polymérisation ou monomère, fluides supports, agents pour abrasifs, agents de séchage et fluides pour unité de production d'énergie.

De préférence, l'invention concerne l'utilisation d'un fluide comprenant la composition selon l'invention en tant que fluide de transfert de chaleur dans une installation de réfrigération ou pompe à chaleur.

L'invention concerne également une installation de transfert de chaleur comprenant un circuit de compression de vapeur contenant un fluide comprenant une composition selon l'invention en tant que fluide de transfert de chaleur ou contenant un fluide de transfert de chaleur tel que décrit ci-dessus.

Selon un mode de réalisation, l'installation est choisie parmi les installations mobiles ou stationnaires de chauffage par pompe à chaleur, de climatisation, et notamment de climatisation automobile ou de climatisation stationnaire centralisée, de réfrigération, de congélation et les cycles de Rankine ; et qui est de préférence une installation de climatisation.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est un fluide comprenant une composition selon l'invention.

Par «fluide de transfert de chaleur », on entend un fluide, susceptible d'absorber de la chaleur en s'évaporant à basse température et basse pression et de rejeter de la chaleur en se condensant à haute température et haute pression, dans un circuit de compression de vapeur.

Un fluide de transfert de chaleur comprend éventuellement un ou plusieurs additifs qui ne sont pas des composés de transfert de chaleur pour l'application envisagée. Les additifs peuvent notamment être choisis parmi les lubrifiants, les nanoparticules, les stabilisants, les tensioactifs, les agents traceurs, les agents fluorescents, les agents odorants et les agents de solubilisation, tel que bien connus de l'homme du métier.

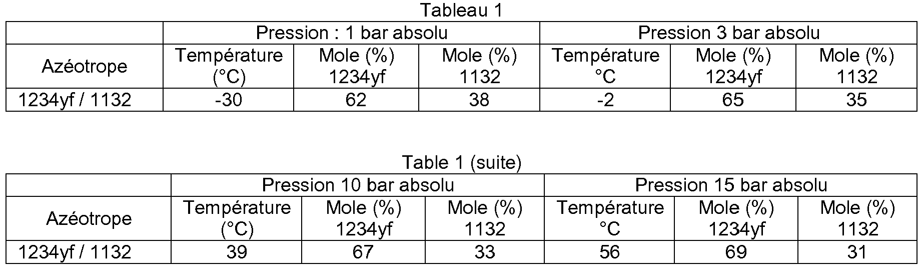

## Revendications

1. Composition azéotropique ou quasi-azéotropique comprenant les composés 2,3,3,3-tetrafluoropropène, 1,2-difluoroethylène et du fluorure d'hydrogène.

2. Composition selon la revendication précédente **caractérisée en ce que** qu'elle comprend, préférentiellement consistant essentiellement en, de 10 % à 55 % en mole de HF, 30 % à 75 % en mole de 2,3,3,3-tetrafluoropropene et 15 % à 40 % en mole de 1,2-difluoroethylène.

3. Utilisation d'un fluide comprenant la composition selon l'une quelconque des revendications précédentes en tant que fluide de transfert de chaleur dans une installation de réfrigération ou pompe à chaleur.

4. Installation de transfert de chaleur comprenant un circuit de compression de vapeur contenant un fluide comprenant la composition selon l'une quelconque des revendications 1 à 2 en tant que fluide de transfert de chaleur.

## Patentansprüche

1. Azeotrope oder quasi-azeotrope Zusammensetzung, die die Verbindungen 2,3,3,3-Tetrafluorpropen, 1,2-Difluorethylen und Fluorwasserstoff umfasst.

2. Zusammensetzung nach dem vorstehenden Anspruch, **dadurch gekennzeichnet, dass** sie 10 Mol-% bis 55 Mol-% HF, 30 Mol-% bis 75 Mol-% 2,3,3,3-Tetrafluorpropen und 15 Mol-% bis 40 Mol-% 1,2-Difluorethylen umfasst, vorzugsweise im Wesentlichen daraus besteht.

3. Verwendung eines Fluids mit der Zusammensetzung nach einem der vorstehenden Ansprüche als Wärmeübertragungsmedium in einer Kälteanlage oder Wärmepumpe.

4. Wärmeübertragungsanlage mit einem Dampfkompressionskreislauf, der ein Fluid mit der Zusammensetzung nach einem der Ansprüche 1 bis 2 als Wärmeübertragungsmedium enthält.

## Claims

1. Azeotropic or near-azeotropic composition comprising the compounds 2,3,3,3-tetrafluoropropene, 1,2-difluoroethylene and hydrogen fluoride.

2. Composition according to the preceding claim, **characterised in that** it comprises, and preferably consists essentially of, from 10 mol% to 55 mol% of hydrogen fluoride, from 30 mol% to 75 mol% of 2,3,3,3-tetrafluoropropene and from 15 mol% to 40 mol% of 1,2-difluoroethylene.

3. Use of a fluid comprising the composition according to any of the preceding claims as a heat transfer fluid in a refrigeration plant or heat pump.

4. Heat transfer system comprising a vapour compression circuit containing a fluid comprising the composition according to any of claims 1 to 2 as a heat transfer fluid in a refrigeration plant or heat pump.
